# EUROPÄISCHE PATENTSCHRIFT

(11) **EP 2 720 022 B1**
(45) Veröffentlichungstag und Bekanntmachung des Hinweises auf die Patenterteilung: **07.03.2018**
(21) Anmeldenummer: 12188365.6
(22) Anmeldetag: 12.10.2012
(51) Int. Cl.: G01B 5/30, G01L 19/10, F16K 17/16, G01L 19/06

(54) **Druckanzeiger für Hochdruckspeicheranlagen**
Pressure indicator for high pressure storage facilities
Indicateur de pression pour installations d'accumulation haute pression

(43) Veröffentlichungstag der Anmeldung: 16.04.2014
(73) Patentinhaber: Magna Steyr Fahrzeugtechnik AG & Co KG, 8041 Graz (AT)
(72) Erfinder: Mayr, Franz, 8323 St.Marein bei Graz (AT); Schmidt, Carsten, 8413 Allerheiligen b.W. (AT); Schärfl, Alexander, 8010 Graz (AT)
(74) Vertreter: Zangger, Bernd

(56) Entgegenhaltungen:
- WO-A1-97/42044
- DE-U1- 20 021 823

## Beschreibung

### Gebiet der Erfindung

Die vorliegende Erfindung betrifft einen Druckanzeiger für eine Hochdruckspeicheranlage für ein Fahrzeug.

### Stand der Technik

Ein Druckanzeiger entsprechend dem Oberbegriff von Anspruch 1 ist aus der EP 1 219 942 A1 bekannt. Bei diesem Druckanzeiger für hydraulische und/oder pneumatische Drucksysteme, bestehend aus einem Gehäuse mit einer mit einem Druckraum des Drucksystems verbindbaren Druckseite und einer entgegengesetzten Anzeigeseite sowie aus einem in dem Gehäuse zwischen Druck- und Anzeigeseite verschiebbar geführten Anzeigeelement, ist das Anzeigeelement auf der Druckseite mit einem Druck beaufschlagbar und dadurch aus einer Ruheposition gegen Federkraft auf der Anzeigeseite in eine Druckanzeigeposition verschiebbar. Der Druckanzeiger ist durch seine sehr einfache Bauweise preisgünstig herstellbar und deshalb auch als Massenprodukt geeignet. Die Bestandteile sind innerhalb des Gehäuses bevorzugt schraubverbindungsfrei gehalten. Dies wird auf der Anzeigeseite durch ein gebördeltes Abschlusselement erreicht. Außerdem sind Dämpfungsmittel zur Bewegungsdämpfung des Anzeigeelementes vorgesehen.

Derartige Druckanzeiger ermöglichen eine schnelle visuelle/optische Erkennung des jeweiligen Druckzustandes. Im drucklosen Zustand steht das stiftförmige Anzeigeelement in seiner federkraftbedingten Ruheposition, in der es auf der Anzeigeseite mit seiner Stirnfläche etwa bündig mit einem Gehäuse abschließt. Bei Druckbeaufschlagung wird das Anzeigeelement gegen die Federkraft in seine das Gehäuse optisch erkennbar überragende Druckanzeigeposition bewegt. Solche Druckanzeiger sind zumeist nur für relativ niedrige Drucke geeignet.
Druckanzeiger wie der in der EP 1 219 942 A1 offenbarte sind zwar grundsätzlich für höhere Drucke geeignet, besitzen aber keine Sicherheit gegen Überdruck und eine eingeschränkte Funktion bei tiefen Temperaturen, da der Dichtring das Anzeigeelement klemmen kann. Durch die Verwendung eines Abschlusselementes als Halteeinrichtung für den Dichtring ist ein zusätzlicher Bauteil notwendig, der einerseits die Kosten erhöht, aber die Sicherheit bei sehr hohen Drucken verringert, da dieser die Druckkraft des Dichtringes halten muss. Dokument WO97/42044 offenbart ebenfalls einen Druckanzeiger. Berstverschraubungen für den Behälterbau und für Ventile sind im Stand der Technik vielfach bekannt. Berstscheiben sind effektive Drucksicherungen, die einen Behälter oder ein System vor schädigendem Über- oder Unterdruck schützen, indem eine Einmal-Membran zerbirst. Somit sind Berstscheiben eine Art Sollbruchstelle. Die Membran ist in der Regel eine dünne Metallfolie aus Stahl oder Edelstahl. Berstscheiben werden oft in Verbindung mit einem Sicherheitsventil verwendet, um die Dichtheit der damit abgesicherten Anlage im Normalbetrieb zu gewährleisten.
Sowohl die DE 1 000 197 B als auch die DE 916 140 C offenbaren die Verwendung von Berstscheiben in Verbindung mit Anzeigeelementen. Allerdings ist in beiden Fällen das Anzeigeelement der Berstscheibe nachgeschaltet und wird nur dazu verwendet, das Ansprechen der Berstscheibe und somit deren Bruch zuverlässig anzuzeigen.

Bei vielen Anwendungen ist erforderlich, dass ein zulässiger Betriebsdruck eines Druckspeicherbehälters oder einer Hochdruckspeicheranlage, insbesondere im Verlauf eines Befüllvorganges, zuverlässig eingehalten wird um Beschädigungen an Druckspeicherbehältern und Druckleitungen zu verhindern. Oft ist es erwünscht dass der Betriebsdruck gleichzeitig auch zuverlässig angezeigt wird.

Es ist eine Aufgabe der Erfindung, Druckanzeiger der zuvor genannten Art in dieser Hinsicht zu verbessern und einen Druckanzeiger anzugeben, der zusätzlich zur Druckanzeigefunktion auch eine Druckentlastungsfunktion erfüllt, der - insbesondere dauerhaft - mit einer Hochdruckspeicheranlage verbunden ist und der ohne elektrische und elektronische Komponenten arbeitet.

Die Komponenten sind möglichst einfach und preisgünstig darzustellen. In den Anforderungen der erfinderischen Anwendung des Druckanzeigers ist das gespeicherte Medium insbesondere gasförmig und erreicht unter Betriebsbedingungen üblicherweise 1000 bar Druck und ist Temperaturen von -40°C bis annähernd 100°C und permanenter Verschmutzung, insbesondere am Fahrzeugunterboden, ausgesetzt. Der Druckanzeiger muss eine einwandfreie Funktion über ca. 10 Jahre Lebensdauer, mit absoluter Dichtheit über alle Druck- und Temperaturbereiche unter allen Betriebsbedingungen und über die gesamte Lebensdauer erfüllen.

Es ist außerdem eine Aufgabe der Erfindung verbesserte Hochdruckspeicheranlagen mit erhöhter Betriebssicherheit zu ermöglichen.

### Zusammenfassung der Erfindung

Die Lösung der Aufgabe erfolgt durch einen Druckanzeiger für eine Hochdruckspeicheranlage, wobei ein Gehäuse eine Kammer mit einem darin bewegbar geführten Anzeigeelement und zumindest eine Druckfeder aufweist, wobei das bewegbar geführte Anzeigeelement auf einer einem Drucküberwachungsbereich zugewandten Seite mit Druck beaufschlagbar und so aus einer Ausgangsposition gegen die Federkraft der zumindest einen Druckfeder reversibel in eine Druckanzeigeposition bewegbar ist, wobei das bewegbar geführte Anzeigeelement einen Entlastungskanal aufweist, und wobei der Entlastungskanal durch eine nicht reversibel arbeitende Druckentlastungsvorrichtung verschlossen ist.

Es resultiert ein sehr kompakter, rein mechanisch-optischer und visuell wahrnehmbarer Druckanzeiger, der aufgrund einer vorgewählten Federkraft ab einem bestimmten Druck ein Anzeigeelement, beispielsweise einen Anzeigestift, in eine für einen Betreiber der Hochdruckspeicheranlage gut sichtbare Anzeigeposition bringt. Gleichermaßen wird das Gesamtsystem gegen Bersten geschützt und das in der Hochdruckspeicheranlage gespeicherte Medium im Extremfall gezielt abgeführt.

Als Hochdruck wird in diesem Zusammenhang jeder Druck bezeichnet der über ein Bar liegt.

Der erfinderische Vorteil dieses mechanisch-optischen und visuell wahrnehmbaren Druckanzeigers liegt darin, dass die Druckanzeige stoßunempfindlich ist und die integrierte, permanent dichte Druckentlastungsvorrichtung, nur bei Übersteigen des Betriebsdruckes und/oder Übersteigen der zulässigen Umgebungstemperatur nicht reversibel öffnet. Eine vorteilhafte Anwendung der integrierten Kombination eines mechanischen Anzeigers für Überdruck und einer nicht reversiblen, temperaturabhängigen Überdrucksicherung erfolgt in z.B. Verschlussschrauben für Hochdruckspeicheranlagen für CNG oder Wasserstoffgas.

Die Lösung der Aufgabe erfolgt außerdem durch eine Hochdruckspeicheranlage für ein Fahrzeug, umfassend zumindest einen damit wirkverbundenen Druckanzeiger.

Der Begriff Fahrzeug umfasst neben Kraftfahrzeugen auch Luft-, Wasser- oder Schienenfahrzeuge.

Die Verwendung des erfindungsgemäßen Druckanzeigers, allein und auch in Kombination mit einem oder mehreren Druckspeicherbehältern dient der Erhöhung der Sicherheit gegen Überfüllung der Hochdruckspeicheranlage beim Betanken und ermöglicht eine einfache, schnelle und sichere Diagnose betreffend den aktuellen Füllzustand der Hochdruckspeicheranlage. Die ist besonders wichtig bei vermuteten Fehlfunktionen der Hochdruckspeicheranlage und bei anstehenden Wartungsarbeiten.

Der erfindungsgemäße Druckanzeiger ist für unterschiedliche Medien wie Wasserstoff, Methan, Erdgas oder ein Gemisch aus Wasserstoff und Erdgas besonders geeignet. Durch entsprechende Modifikationen ist auch eine Verwendung mit Flüssig-Gas (LPG) und anderen flüssigen Medien möglich.

Weiterbildungen der Erfindung sind in den abhängigen Ansprüchen, der Beschreibung sowie den beigefügten Zeichnungen angegeben.

Vorzugsweise ist der Druckanzeiger so ausgeführt, dass der Entlastungskanal als axiale Bohrung im Anzeigeelement angeordnet ist. Der Entlastungskanal verbindet so den Drucküberwachungsbereich im Inneren des Druckanzeigers mit dem außerhalb einer Hochdruckspeicheranlage liegenden Anzeigebereich auf sehr direktem und kurzem Weg und das entsprechende Anzeigeelement ist einfach zu fertigen. Der Entlastungskanal muss nicht durch Bohren hergestellt werden, auch die Herstellung durch z.B. Gießen wäre möglich.

In einer besonders bevorzugten Ausführung weist das bewegbar geführte Anzeigeelement zumindest ein Dichtelement auf. Das Dichtelement ist beispielsweise als O-Ring in Verbindung mit einem Stützring ausgebildet. Es ist entweder in einer Nut radial außen am Anzeigeelement angeordnet oder alternativ auch in einer Nut in einem vorzugsweise zylindrischen Bereich einer Kammer des Grundkörpers des Druckanzeigers. Gleitflächen am Anzeigeelement oder in der Kammer des Grundkörpers sind zwecks besserer Beweglichkeit des Anzeigeelementes und verbesserter Gasdichtheit vorzugsweise poliert.

Das bewegbar geführte Anzeigeelement weist an einem Ende vorzugsweise einen Kolbenkopf mit vergrößertem Durchmesser auf. Dieser vergrößerte Kolbenkopf eignet sich besonders zur Anordnung der im Anzeigeelement integrierten Druckentlastungsvorrichtung. Außerdem kann die zwischen einem Durchmesser im Dichtungsbereich und dem vergrößerten Durchmesser des Kolbenkopfes entstehende Stufe als Auflage für ein Dämpfungselement und/oder als Anschlag für das Anzeigeelement dienen.

In einer Ausführungsform des erfindungsgemäßen Druckanzeigers ist die nicht reversibel arbeitende Druckentlastungsvorrichtung auf einer dem Drucküberwachungsbereich zugewandten Seite des bewegbar geführten Anzeigeelements angeordnet. Besonders vorteilhaft wirkt sich im Falle einer Berstscheibe als Druckentlastungsvorrichtung aus, wenn zwischen Berstscheibe und Entlastungskanal im Anzeigeelement ein Expansionsraum vorgesehen ist. Dieser ist so ausgebildet, dass die, vorzugsweise als Umkehrberstscheibe ausgeführte Berstscheibe ungehindert bersten kann, und der Entlastungskanal nicht durch Teile der Berstscheibe verlegt werden kann. Ein weiterer Vorteil dieser Ausführung liegt darin, dass die Berstscheibe vor äußeren Einwirkungen (Schmutz, Beschädigung) gut geschützt ist.

In einer weiteren Ausführungsform des erfindungsgemäßen Druckanzeigers ist die nicht reversibel arbeitende Druckentlastungsvorrichtung auf einer dem Drucküberwachungsbereich abgewandten Seite des bewegbar geführten Anzeigeelements angeordnet.

In einer weiteren bevorzugten Ausführung des erfindungsgemäßen Druckanzeigers ist die nicht reversibel arbeitende Druckentlastungsvorrichtung eine temperaturabhängig ansprechende Einrichtung. Bekannte Einrichtungen dieser Art sind Schmelzpfropfen aus Materialien mit einem definierten Schmelzpunkt. Aber auch brennbare Materialien können in temperaturabhängig ansprechenden Einrichtungen eingesetzt werden. Besonders vorteilhaft wirkt sich in dieser Ausführung aus, dass die Druckentlastungsvorrichtung bereits bei einer unzulässigen Temperaturerhöhung anspricht, ohne dass der Innendruck der Hochdruckspeicheranlage einen gefährlich hohen Wert erreicht.

In einer besonders vorteilhaften Ausführung ist die nicht reversibel arbeitende Druckentlastungsvorrichtung eine auf erhöhten Druck reagierende Einrichtung. Diese auf erhöhten Druck reagierende Einrichtung ist in den nachfolgenden Figuren als Berstscheibe dargestellt. Diese Berstscheiben sind in einer besonders vorteilhaften Ausführung der Erfindung stoffschlüssig verbunden, insbesondere verschweißt. Die auf erhöhten Druck reagierenden Einrichtungen können mit dem Anzeigeelement aber auch beispielsweise verlötet, verklebt, sowie eingepasst oder gebördelt sein.

Ein Ansprechdruck des Druckanzeigers, das ist der Druck im Drucküberwachungsbereich bei dem das Anzeigeelement sichtbar in den Anzeigebereich verschoben wird, ist im Wesentlichen durch die Federkraft der Druckfeder bestimmt. Dieser Anzeigedruck wird vorteilhaft auf einen niedrigen Wert eingestellt, sodass der Druckanzeiger auch einen geringen Restdruck in der Hochdruckspeicheranlage deutlich erkennbar anzeigt.

Besonders vorteilhaft wirkt sich aus, wenn das bewegbar geführte Anzeigeelement ein Dämpfungselement, insbesondere eine Tellerfeder aufweist. Die Tellerfeder ist vorzugsweise so angeordnet, dass sie zuerst einen bestimmten Weg des Anzeigeelements ohne Gegenkraft zulässt. Deren Federkraft ist beispielsweise so ausgelegt, dass sie erst ab mindestens 2 bar anspricht und bei idealerweise 10 bar Betriebsdruck das Anzeigeelement in mechanischen Anschlag geht. Dies hat den Vorteil, dass eine zweistufige Druckanzeige möglich wird. Außerdem wirkt die Tellerfeder als Dämpfungselement beim Dämpfungsanschlag zwischen Anzeigeelement und Grundkörper.

In einer Ausführungsform des Druckanzeigers, in der der vergrößerte Kolbenkopf an der dem Drucküberwachungsbereich abgewandten Seite des bewegbar geführten Anzeigeelements liegt, weist das bewegbar geführte Anzeigeelement vorzugsweise einen Sicherungsring auf. Dieser Sicherungsring dient in einer bevorzugten Ausführung als Auflage für die Druckfeder und/oder als Anschlag für das Anzeigeelement am Grundkörper. Auch ist das Anzeigeelement so unverlierbar im Grundgehäuse des Druckanzeigers gehalten.

In einer vorteilhaften Ausführungsform weist das bewegbar geführte Anzeigeelement an dem einem Anzeigebereich zugewandten Ende einen Anzeigestift auf. Ein eingeschraubter oder gesteckter Anzeigestift ist idealerweise aus einem reibungsarmen Kunststoff oder Metall mit Kunststoffüberzug gefertigt. Dadurch kann der Spalt zum Grundkörper sehr klein gehalten werden, ohne dass ein Klemmen des Anzeigeelementes befürchtet werden muss. Der im bewegbar geführten Anzeigeelement angeordnete Entlastungskanal wird im Anzeigestift zumindest so weit fortgeführt, dass nach einem Ansprechen der nicht reversibel arbeitenden Druckentlastungsvorrichtung gegebenenfalls austretendes Medium aus dem Drucküberwachungsbereich in den Anzeigebereich ausströmen kann.

In einer weiteren vorteilhaften Ausführungsform weist der Kolbenkopf oder der Anzeigestift zumindest eine Kennzeichnung auf, wobei bevorzugt zwei unterschiedliche Kennzeichnungen so am Kolbenkopf oder am Anzeigestift angeordnet sind, dass zwei unterschiedliche Betriebsdruck-Niveaus optisch wahrnehmbar angezeigt werden. Die Kennzeichnungen können beispielsweise als umlaufende Nuten oder Rillen (mit oder ohne Farbe) ausgeführt sein. Insbesondere im oben beschriebenen Zusammenwirken der Druckfeder mit dem Dämpfungselement können so durch den Druckanzeiger mehrere für die Funktion der Hochdruckspeicheranlage wesentliche Betriebsdruck-Niveaus, nämlich kein Überdruck (Anlage ist leer), Restdruck und/oder Betriebsdruck optisch wahrnehmbar im Anzeigebereich dargestellt werden.

In einer weiteren vorteilhaften Ausführungsform weist der Grundkörper ein Montagegewinde auf und ist mit einem Montagedichtring in eine Ausnehmung eines Aufnahmeblocks einschraubbar. Das ermöglicht einen besonders modularen Aufbau und eine einfache und platzsparende Montage des Druckanzeigers. Derartige Druckanzeiger können beispielsweise als Ventilkombinationen im Einlassbereich von Tanks oder Tanksystemen von Fahrzeugen eingesetzt werden, um bei einem Tank- oder Befüllvorgang ein Überfüllen des Druckspeicherbehälters mit Kraftstoff zu verhindern. Das Anzeigeelement und/oder der Grundkörper sind vorzugsweise aus einem gut gleitenden Material hergestellt. Durch eine den sehr hohen Drucken (üblicherweise 200 bis 1000 Bar) angepasste Materialwahl wird die Funktion optimiert. Bevorzugte Materialien und Materialkombinationen sind dem Fachmann geläufig.

Gemäß einer weiteren Ausführungsform der Erfindung ist der Entlastungskanal mit einer Leitung zur Entsorgung von austretendem Medium verbunden. Dadurch kann gegebenenfalls austretendes (brennbares) Medium aus der unmittelbaren Umgebung des Druckanzeigers abtransportiert und an einer geeigneten Stelle ohne Gefahr für Fahrzeuginsassen bei niedrigem Druck weiterbehandelt werden.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer Ausführungsform des erfindungsgemäßen Druckanzeigers mit Berstscheibe auf der dem Drucküberwachungsbereich zugewandten Seite des Druckanzeigeelements.
- Fig. 2: ist eine Schnittansicht einer weiteren Ausführungsform eines erfindungsgemäßen Druckanzeigers mit Berstscheibe auf der dem Anzeigebereich zugewandten Seite des Druckanzeigeelements.

### Detaillierte Beschreibung der Erfindung

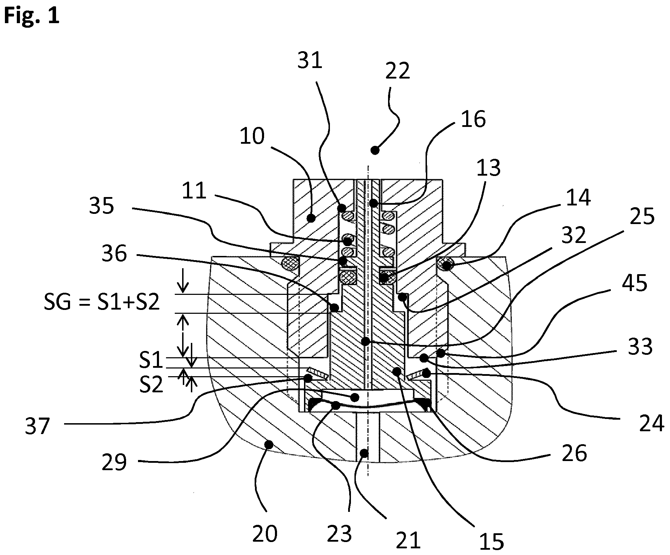

Der in Figur 1 beispielhaft gezeigte Druckanzeiger besteht aus einem einteiligen Grundkörper 10 aus nicht korrodierendem Stahl. Der Grundkörper ist idealer Weise wie eine Verschlussschraube ausgeführt und zweistufig hohlgebohrt. Ein axial verschiebbares Anzeigeelement 15, ebenfalls aus nicht korrodierendem Stahl, ist am Außendurchmesser mindestens zweistufig ausgeführt, wenn ein Anzeigestift 16 in das Anzeigeelement 15 eingeschraubt oder gesteckt ist (nicht zeichnerisch dargestellt). Bei der gezeigten einteiligen Ausführung des Anzeigeelements 15 mit integriertem Anzeigestift 16 ist dieser am Außendurchmesser dreistufig dargestellt. Das Anzeigeelement 15 ist innen durchgängig hohlgebohrt 25, der Anzeigestift 16 ebenfalls, wenn er in einer Ausführung im Anzeigeelement fixiert ist. Weiter ist das Anzeigeelement 15 zweistufig hohlgebohrt und besitzt in der größeren Öffnung eine dicht montierte Berstscheibe 23. In der zeichnerisch dargestellten Ausführung ist die Berstscheibe 23 mit dem Anzeigeelement 15 verschweißt 26 und als Umkehrberstscheibe ausgeführt. Die Berstscheibe 23 ist in ihrem Ansprechverhalten so ausgeführt, dass sie bei maximaler Umgebungstemperatur ab einer Überschreitung von mindestens 5% des maximal zulässigen Betriebsdrucks, aber sicher unterhalb des maximal zulässigen Betriebsdruckes der Gesamtanlage nicht reversibel öffnet. Weiter ist die Berstscheibe 23 derart ausgeführt, dass sie bei Überschreitung der maximal zulässigen Umgebungstemperatur ihren Öffnungsdruck absenkt. Dies hat den Vorteil, dass ein Öffnen innerhalb der Betriebsbedingungen vermieden wird, aber z.B. im Brandfall, eine rasche Druckentlastung der Anlage erfolgt. Weiter ist bei geöffneter Berstscheibe die Hochdruckspeicheranlage nicht mehr mit Druck beaufschlagbar und somit eine Überprüfung der Hochdruckspeicheranlage betreffend Betriebsdrucküberschreitung zwingend erforderlich.

Die Bohrung 25 im Anzeigeelement 15 ist derart ausgeführt, dass die Ausströmgeschwindigkeit des Speichermediums kontrolliert wird. Dies kann durch den Querschnitt der Bohrung oder durch Querschnittsverjüngungen dargestellt werden.

Als Stellglied für das Anzeigeelement wird entsprechend dem Stand der Technik eine oder zwei Druckfedern 11 derart verwendet, dass in drucklosem Zustand das Anzeigeelement 15 mit dem Anzeigestift 16 so in seiner Ausgangslage fixiert ist, dass der Anzeigestift mit dem Grundkörper 10 möglichst eben abschließt. Idealerweise wird eine Spiralfeder 11 als Druckfeder mit einer Tellerfeder 24 kombiniert. Die Druckfeder 11 weist bevorzugt eine Federkraft auf, die einem sehr kleinen Überdruck im System entspricht und ein nicht ausgeschobenes Anzeigeelement 15 anzeigt, dass ein gefahrloses Öffnen der Hochdruckspeicheranlage möglich ist. Die Tellerfeder 24 ist in der Position so montiert, dass sie erst einen bestimmten Weg des Anzeigeelements ohne Gegenkraft zulässt und deren Gegenkraft ist so ausgelegt, dass sie erst ab mindestens 2 bar anspricht und bei idealerweise 10 bar Betriebsdruck das Anzeigeelement in mechanischen Anschlag geht. Die Tellerfeder stützt sich dann an der (Tellerfeder)auflage 37 des Anzeigeelementes 15 und dem Dämpfungsanschlag 33 des Grundkörpers ab. Dies hat den Vorteil, dass eine zweistufige Druckanzeige ermöglicht wird. Außerdem wirkt die Tellerfeder als Dämpfungselement beim Dämpfungsanschlag 33 zwischen Anzeigeelement 15 und Grundkörper 10.

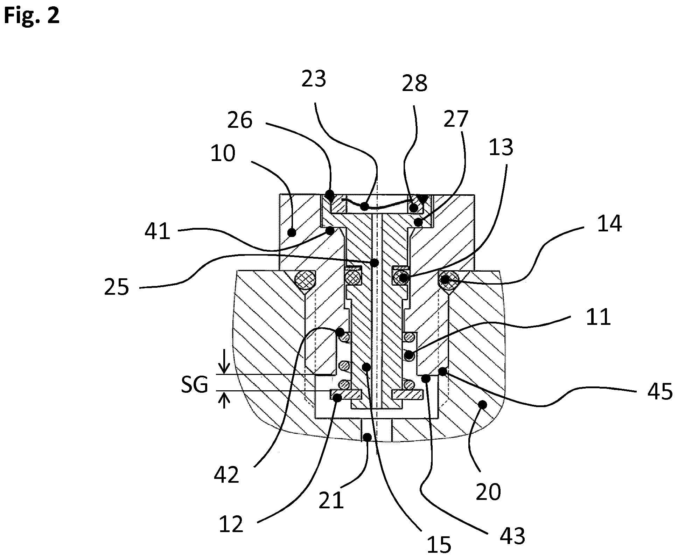

Als Dichtsystem zwischen Grundkörper 10 und Anzeigeelement 15 ist entsprechend dem Stand der Technik ein O-Ring mit Stützring 13 montiert. In den zeichnerisch dargestellten Formen ist die Fixierung des Anzeigeelements gegen die Federkraft einmal als Anschlag im Grundkörper (Fig.1) und einmal (in Fig.2) mit einem Sicherungsring 12 dargestellt.

Der Funktionsablauf des in Fig.1 dargestellten Druckanzeigers im Betrieb wird folgend beschrieben. Sobald Druck im Drucküberwachungsbereich 21 aufgebaut wird und zum Druckanzeiger gelangt, wird das Anzeigeelement 15 gegen die Federkraft der auf den Federauflagen 31 (am Grundkörper 10) und 35 (am Anzeigeelement 15) abgestützten Druckfeder 11 bis zum Anschlag der Tellerfeder 24 in Richtung Außen-/Anzeigebereich 22 gedrückt (freier Hub S1) und der Anzeigestift 16 somit ebenfalls nach außen. Durch eine farbliche Kennzeichnung des Stiftendes wird entsprechend dem Stand der Technik ein Überdruck im System signalisiert. Bei weiterer Druckerhöhung (Druck größer mindestens 2 bar), wird gegen die Kraft der Tellerfeder 24 das Anzeigeelement 15 um den Hub S2 der Tellerfeder 24 weiter nach außen bis zum mechanischen Anschlag von Kolbenanschlag 36 und Grundkörperanschlag 32 gedrückt (Gesamthub SG ist die Summe aus S1 und S2). Der erhöhte Betriebsdruck im System wird durch eine andere farbliche Kennzeichnung, z.B. roter Ring, angezeigt. Für die automotive Anwendung entspricht die Gegenkraft der Tellerfeder im Anschlagpunkt des Anzeigeelementes idealerweise 10 bar, der maximale Betriebsdruck liegt üblicherweise zwischen 200 und 900 bar, der minimale Betriebsdruck über 10 bar. Wenn der Druck im System sich im Bereich zwischen minimalem und maximalem Betriebsdruck befindet führt das Anzeigeelement keine Bewegung durch. Erst im Servicefall oder am Ende der Lebensdauer, wenn der Druck aus dem System abgelassen wird, rückt das Anzeigeelement 15 aus dem mechanischen Anschlag und zeigt eine Unterschreitung von 10 bar Betriebsdruck an.

Da in automotiven Hochdruckspeicheranlagen der minimale Betriebsdruck aus technischen Gründen derzeit 10 bar nicht unterschreitet, bleibt das Anzeigeelement mit dem Anzeigestift immer im mechanischen Anschlag (Gesamthub SG), wodurch das Dichtelement 13 geschont wird.

Der Druck, ab dem jeweils ein Verschieben des Anzeigeelementes 15 erfolgt ist durch die jeweilige Federkraft der Druckfeder 11 und der Tellerfeder 24 einstellbar und oben angeführte Werte sind Beispiele. Dies gilt auch für den Berstdruck der Berstscheibe 23. Bei Überschreitung von z.B. 5% des maximalen Betriebsdruckes öffnet die Berstscheibe und lässt das Speichermedium entsprechend der ausgeführten Bohrungsquerschnitte abströmen.

In Figur 2 ist eine Weiterentwicklung eines erfindungsgemäßen Druckanzeigers exemplarisch im Schnitt dargestellt. In der gezeigten Ausführung sind das Anzeigeelement 15 und der Grundkörper 10 ähnlich wie in Fig. 1 ausgeführt, wobei jedoch die Berstscheibe anstelle des Anzeigestiftes 16 positioniert ist. Dies hat den enormen Vorteil, dass einerseits der Druckanzeiger sehr kostengünstig dargestellt werden kann und andererseits gleichzeitig mehrere Funktionen erfüllt.

Durch die exponierte Lage der Berstscheibe 23 ist diese direkt der Umgebungstemperatur ausgesetzt, wodurch die Berstscheibe 23 bei einem unzulässigen Temperaturanstieg, wie beispielsweise in einem Brandfall, rasch anspricht. Dadurch kann der erfindungsgemäße Druckanzeiger einen derzeit automotiv üblichen temperaturgesteuerten Druckminderer ersetzen. Zur Absicherung von herkömmlichen Hochdruckspeicheranlagen reicht aber ein temperaturgesteuerter Druckminderer nicht aus. Zusätzlich ist eine druckabhängige Schalteinrichtung, welche bei Überdruck vor Erreichen des Berstdruckes der Hochdruckspeicheranlage das System öffnet erforderlich. Hierzu wird in derartigen Hochdruckspeicheranlagen meist ein separates Druckbegrenzungsventil verbaut. Mit dem erfindungsgemäßen Druckanzeiger ist dies nicht mehr erforderlich, da der Druckanzeiger temperaturabhängig und/oder druckabhängig öffnet (also den Druck begrenzt) und zusätzlich eine (zweistufige) Druckanzeige bereitstellt.

Der mit der Bewegungsachse des Anzeigeelements 15 fluchtende Entlastungskanal 25 ermöglicht die pneumatische oder hydraulische Kommunikation des Mediums mit der dem Außenbereich 22 zugewandt in einem Trägerring 28 angeordneten und im Kolbenkopf 27 eingeschweißten Berstscheibe 23.

Der Kolbenkopf 27 mit der Aufnahme für die Berstscheibe ragt bei Druckbeaufschlagung um den gesamten Hub SG in den Außenbereich 22 und ist somit ein gut sichtbarer Indikator, dass der Betriebsdruck im System größer als beispielsweise 10 bar ist. Erhöht wird die Sichtbarkeit und Signalwirkung durch Einfärbung des Kolbenkopfes 27 in Signalfarbe und zusätzlich gesteigert durch eine farblich idente Abdeckkappe für die Berstscheibe (nicht dargestellt). Die Berstscheibe schützt das Drucksystem vor Überschreitung des zulässigen Betriebsdruckes, wobei durch diese Positionierung ein weiterer Effekt genützt werden kann.

Die Auslegung der Berstscheibe 23 erfolgt so, dass bei maximal zulässiger Umgebungstemperatur der Berstdruck über dem maximalen Betriebsdruck liegt. Im Falle eines Brandes steigt die Umgebungstemperatur, wodurch der Berstdruck der Berstscheibe 23 sinkt. Dadurch wird eine doppelte Sicherheit im Brandfall erzielt. Falls der Druck im System durch Hitze an einem vom Druckanzeiger entfernten Ort steigt, wobei das Sicherheitsventil thermisch nicht belastet wird, öffnet das Sicherheitsventil maximal 5% über dem maximalen Betriebsdruck. Wenn der Druckanzeiger und somit die nicht reversible Druckentlastungsvorrichtung 23 direkt der Hitzequelle ausgesetzt ist, verringert sich der Berstdruck entsprechend und es wird schon bei geringerem Druck das System entleert. Optimiert ist diese Funktion durch die ausragende Position des Kolbenkopfes mit der Berstscheibe 23 schon bei niedrigem Systemdruck. Eine Ausführung mit geschlossener Form des Grundkörpers 10 über dem Kolbenkopf 27 ermöglicht eine gezielte Abführung des Mediums durch die Anschlussmöglichkeit einer Leitung (nicht dargestellt). Die optische/visuelle Druckanzeige ist dann aber nicht mehr gegeben.

In drucklosem Zustand wird der Kolbenkopf 27 des Anzeigeelements durch die Kraft der Druckfeder 11 gegen die Ruheauflage 41 im Grundkörper 10 gedrückt.

Wenn zum Beispiel bei einem Befüllvorgang der Druck in der gesamten Hochdruckspeicheranlage so weit ansteigt, dass aufgrund der Kraftverhältnisse durch den anliegenden Druck auf das Anzeigeelement 15 die Federkraft der zwischen dem Sicherungsring 12 und einer Federauflage 42 abgestützten Druckfeder 11 überwindet, wird das Anzeigeelement 15 mit dem Sicherungsring 12 gegen den Anschlag 43 des Grundkörpers 10 geschoben (gesamter Hub SG). Dieser Druck entspricht dem Anzeigedruck.

In beiden (Fig. 1 und Fig.2) dargestellten Ausführungsformen weist der Grundkörper 10 ein Montagegewinde 45 auf und ist mit einem Montagedichtring 14 in eine Ausnehmung eines Aufnahmeblocks 20 der Hochdruckspeicheranlage einschraubbar.

Diese Bauvariante des erfindungsgemäßen Druckanzeigers kann besonders platzsparend ausgeführt werden. Der Einbau dieses Druckanzeigers kann in jedem Ventilkörper, Tankadapter, Speicher oder Leitungsteil erfolgen. Die aufgezählten Ausführungen sind beliebig vermischbar.

Alle angegebenen Druckwerte sind beispielhaft und führen zu keiner Einschränkung der Erfindung und die erfindungsgemäße Lösung kann für nahezu beliebige Druckbereiche ausgeführt werden.

### Bezugszeichenliste

- 10: Grundkörper
- 11: Druckfeder (Spiralfeder)
- 12: Sicherungsring
- 13: Dichtelement
- 14: Montagedichtring
- 15: Anzeigeelement (Kolben)
- 16: Anzeigestift

- 20: Aufnahmeblock (Hochdruckspeicheranlage)
- 21: Drucküberwachungsbereich
- 22: Anzeigebereich
- 23: Nicht reversibel arbeitende Druckentlastungsvorrichtung (z.B. Berstscheibe)
- 24: Tellerfeder
- 25: Entlastungskanal
- 26: Schweißnaht
- 27: Kolbenkopf
- 28: Trägerring (f. Berstscheibe)
- 29: Expansionsraum
- 31: Federauflage
- 32: Grundkörperanschlag
- 33: Dämpfungsanschlag

- 35: Federauflage
- 36: Kolbenanschlag
- 37: Auflage

- 41: Ruheauflage
- 42: Federauflage
- 43: Anschlag

- 45: Montagegewinde

- S1: freier Hub
- S2: Hub der Tellerfeder
- SG: Gesamthub

## Patentansprüche

1. Druckanzeiger für eine Hochdruckspeicheranlage, wobei ein Gehäuse (10) eine Kammer mit einem darin bewegbar geführten Anzeigeelement (15) und zumindest eine Druckfeder (11) aufweist, wobei das bewegbar geführte Anzeigeelement (15) auf einer einem Drucküberwachungsbereich (21) zugewandten Seite mit Druck beaufschlagbar und so aus einer Ausgangsposition gegen die Federkraft der zumindest einen Druckfeder (11) reversibel in eine Druckanzeigeposition bewegbar ist,
das bewegbar geführte Anzeigeelement (15) einen Entlastungskanal (25) aufweist, wobei der Entlastungskanal (25) durch eine nicht reversibel arbeitende Druckentlastungsvorrichtung (23) verschlossen ist, **dadurch gekennzeichnet, dass** durch den Entlastungskanal (25) das in der Hochdruckspeicheranlage gespeicherte Medium abgeführt werden kann.

2. Druckanzeiger nach Anspruch 1,
**dadurch gekennzeichnet, dass**
der Entlastungskanal (25) als im Wesentlichen axiale Bohrung im Anzeigeelement (15) angeordnet ist.

3. Druckanzeiger nach Anspruch 1 oder 2,
**dadurch gekennzeichnet, dass**
das bewegbar geführte Anzeigeelement (15) zumindest ein Dichtelement (13) aufweist.

4. Druckanzeiger nach einem der vorhergehenden Ansprüche,
**dadurch gekennzeichnet, dass** das bewegbar geführte Anzeigeelement (15) an einem Ende einen Kolbenkopf (27) mit vergrößertem Durchmesser aufweist.

5. Druckanzeiger nach einem der vorhergehenden Ansprüche,
**dadurch gekennzeichnet, dass**
die nicht reversibel arbeitende Druckentlastungsvorrichtung (23) auf einer dem Drucküberwachungsbereich (21) zugewandten Seite des bewegbar geführten Anzeigeelements (15) angeordnet ist.

6. Druckanzeiger nach einem der vorhergehenden Ansprüche,
**dadurch gekennzeichnet, dass**
die nicht reversibel arbeitende Druckentlastungsvorrichtung (23) auf einer dem Drucküberwachungsbereich (21) abgewandten Seite des bewegbar geführten Anzeigeelements (15) angeordnet ist

7. Druckanzeiger nach einem der vorhergehenden Ansprüche,
**dadurch gekennzeichnet, dass**
die nicht reversibel arbeitende Druckentlastungsvorrichtung (23) mit dem Anzeigeelement (15) stoffschlüssig verbunden ist.

8. Druckanzeiger nach einem der vorhergehenden Ansprüche,
**dadurch gekennzeichnet, dass**
der Ansprechdruck des Druckanzeigers im Wesentlichen durch die Federkraft der Druckfeder (11) bestimmt ist.

9. Druckanzeiger nach einem der vorhergehenden Ansprüche,
**dadurch gekennzeichnet, dass**
das bewegbar geführte Anzeigeelement (15) ein Dämpfungselement (24) aufweist.

10. Druckanzeiger nach einem der vorhergehenden Ansprüche,
**dadurch gekennzeichnet, dass**
das bewegbar geführte Anzeigeelement (15) einen Sicherungsring (12) aufweist.

11. Druckanzeiger nach einem der vorhergehenden Ansprüche,
**dadurch gekennzeichnet, dass**
das bewegbar geführte Anzeigeelement (15) an dem einem Anzeigebereich zugewandten Ende einen Anzeigestift (16) aufweist.

12. Druckanzeiger nach einem der Ansprüche 4 oder 11,
**dadurch gekennzeichnet, dass**
der Kolbenkopf (27) oder der Anzeigestift (16) zumindest eine Kennzeichnung aufweist, wobei bevorzugt zwei unterschiedliche Kennzeichnungen so am Kolbenkopf (27) oder am Anzeigestift (16) angeordnet sind, dass zwei unterschiedliche Betriebsdruck-Niveaus optisch wahrnehmbar angezeigt werden.

13. Druckanzeiger nach einem der vorhergehenden Ansprüche,
**dadurch gekennzeichnet, dass**
der Grundkörper(10) ein Montagegewinde (45) aufweist und mit einem Montagedichtring (14) in eine Ausnehmung des Aufnahmeblocks (20) einschraubbar ist.

14. Hochdruckspeicheranlage für ein Kraftfahrzeug, umfassend zumindest einen Druckanzeiger nach einem der vorhergehenden Ansprüche.

## Claims

1. Pressure indicator for a high-pressure accumulator system, wherein a housing (10) has a chamber with an indicating element (15) guided movably therein, and at least one compression spring (11), wherein the movably guided indicating element (15) is pressurizable on a side facing a pressure-monitoring region (21) and is thus movable reversibly counter to the spring force of the at least one compression spring (11) from a starting position into a pressure-indicating position, whereby the movably guided indicating element (15) has a relief channel (25), wherein the relief channel (25) is closed by a non-reversibly operating pressure relief device (23), **characterized in that** the medium accumulated in the high-pressure accumulator system can be removed through the relief channel (25).

2. Pressure indicator according to Claim 1, **characterized in that** the relief channel (25) is arranged as a substantially axial bore in the indicating element (15).

3. Pressure indicator according to Claim 1 or 2, **characterized in that** the movably guided indicating element (15) has at least one sealing element (13).

4. Pressure indicator according to one of the preceding claims, **characterized in that** one end of the movably guided indicating element (15) has a piston head (27) having an increased diameter.

5. Pressure indicator according to one of the preceding claims, **characterized in that** the non-reversibly operating pressure relief device (23) is arranged on a side of the movably guided indicating element (15) facing the pressure-monitoring region (21).

6. Pressure indicator according to one of the preceding claims, **characterized in that** the non-reversibly operating pressure relief device (23) is arranged on a side of the movably guided indicating element (15) facing away from the pressure-monitoring region (21).

7. Pressure indicator according to one of the preceding claims, **characterized in that** the non-reversibly operating pressure relief device (23) is connected in an integrally bonded manner to the indicating element (15).

8. Pressure indicator according to one of the preceding claims, **characterized in that** the response pressure of the pressure indicator is substantially determined by the spring force of the compression spring (11).

9. Pressure indicator according to one of the preceding claims, **characterized in that** the movably guided indicating element (15) has a damping element (24).

10. Pressure indicator according to one of the preceding claims, **characterized in that** the movably guided indicating element (15) has a locking ring (12).

11. Pressure indicator according to one of the preceding claims, **characterized in that** the movably guided indicating element (15) has an indicating pin (16) at the end facing an indicating region.

12. Pressure indicator according to either of Claims 4 and 11, **characterized in that** the piston head (27) or the indicating pin (16) has at least one marking, wherein, preferably, two different markings are arranged on the piston head (27) or on the indicating pin (16) in such a manner that two different operating-pressure levels are indicated in a visually perceptible manner.

13. Pressure indicator according to one of the preceding claims, **characterized in that** the basic body (10) has an installation thread (45) and is screwable with an installation sealing ring (14) into a recess of the receiving block (20).

14. High-pressure accumulator system for a vehicle, comprising at least one pressure indicator according to one of the preceding claims.

## Revendications

1. Indicateur de pression pour une installation d'accumulation haute pression, dans lequel un corps (10) présente une chambre avec un élément d'indication (15) guidé en mouvement dans celle-ci et au moins un ressort de pression (11), dans lequel l'élément d'indication guidé en mouvement (15) peut être soumis à une pression sur le côté tourné vers une zone de surveillance de pression (21) et ainsi être déplaçable de façon réversible d'une position initiale contre la force élastique dudit au moins un ressort de pression (11) à une position d'indication de pression, dans lequel l'élément d'indication guidé en mouvement (15) présente un canal de détente (25), dans lequel le canal de détente (25) est fermé par un dispositif de détente de pression (23) opérant de façon non réversible, **caractérisé en ce que** le milieu accumulé dans l'installation d'accumulation haute pression peut être évacué par le canal de détente (25) .

2. Indicateur de pression selon la revendication 1, **caractérisé en ce que** le canal de détente (25) est disposé sous la forme d'un alésage essentiellement axial dans l'élément d'indication (15).

3. Indicateur de pression selon la revendication 1 ou 2, **caractérisé en ce que** l'élément d'indication guidé en mouvement (15) présente au moins un élément d'étanchéité (13) .

4. Indicateur de pression selon l'une quelconque des revendications précédentes, **caractérisé en ce que** l'élément d'indication guidé en mouvement (15) présente à une extrémité une tête de piston (27) avec un diamètre accru.

5. Indicateur de pression selon l'une quelconque des revendications précédentes, **caractérisé en ce que** le dispositif de détente de pression (23) opérant de façon non réversible est disposé sur un côté de l'élément d'indication guidé en mouvement (15) tourné vers la zone de surveillance de pression (21).

6. Indicateur de pression selon l'une quelconque des revendications précédentes, **caractérisé en ce que** le dispositif de détente de pression (23) opérant de façon non réversible est disposé sur un côté de l'élément d'indication guidé en mouvement (15) détourné de la zone de surveillance de pression (21).

7. Indicateur de pression selon l'une quelconque des revendications précédentes, **caractérisé en ce que** le dispositif de détente de pression (23) opérant de façon non réversible est relié matériellement à l'élément d'indication (15).

8. Indicateur de pression selon l'une quelconque des revendications précédentes, **caractérisé en ce que** la pression de réponse de l'indicateur de pression est déterminée essentiellement par la force élastique du ressort de pression (11).

9. Indicateur de pression selon l'une quelconque des revendications précédentes, **caractérisé en ce que** l'élément d'indication guidé en mouvement (15) présente un élément d'amortissement (24).

10. Indicateur de pression selon l'une quelconque des revendications précédentes, **caractérisé en ce que** l'élément d'indication guidé en mouvement (15) présente une bague de fixation (12).

11. Indicateur de pression selon l'une quelconque des revendications précédentes, **caractérisé en ce que** l'élément d'indication guidé en mouvement (15) présente une tige d'indication (16) à une extrémité tournée vers une zone d'indication.

12. Indicateur de pression selon une des revendications 4 ou 11, **caractérisé en ce que** la tête de piston (27) ou la tige d'indication (16) présente au moins un repère, dans lequel de préférence au moins deux repères différents sont disposés sur la tête de piston (27) ou sur la tige d'indication (16), de telle manière que deux niveaux de pression de service différents soient indiqués de façon perceptible visuellement.

13. Indicateur de pression selon l'une quelconque des revendications précédentes, **caractérisé en ce que** le corps de base (10) présente un filetage de montage (45) et peut être vissé avec un joint torique de montage (14) dans un évidement du bloc de réception (20).

14. Installation d'accumulation haute pression pour un véhicule automobile, comprenant au moins un indicateur de pression selon l'une quelconque des revendications précédentes.
